# FASCICULE DE BREVET EUROPEEN

(11) **EP 1 943 144 B1**
(45) Date de publication et mention de la délivrance du brevet: **31.03.2010**
(21) Numéro de dépôt: 06830988.9
(22) Date de dépôt: 23.10.2006
(51) Int. Cl.: B64D 27/14

(54) **AÉRONEF À IMPACT ENVIRONNEMENTAL RÉDUIT.**
FLUGZEUG MIT REDUZIERTEN UMWELTAUSWIRKUNGEN
AIRCRAFT HAVING A REDUCED ENVIRONMENTAL IMPACT

(30) Priorité: 03.11.2005 FR 0511176
(43) Date de publication de la demande: 16.07.2008
(73) Titulaire: AIRBUS OPERATIONS (SAS), 31060 Toulouse (FR)
(72) Inventeur: GALL, Pierre-Emmanuel, F-31200 Toulouse (FR); CROS, Christophe, F-31240 L'Union (FR)
(74) Mandataire: Bonnetat, Christian
(86) Numéro de dépôt international: PCT/FR2006/002372
(87) Numéro de publication internationale: WO 2007/051914

(56) Documents cités:
- DE-U1- 7 808 902
- GB-A- 1 397 068
- GB-A- 1 480 340
- US-A- 3 652 035
- US-A- 3 807 665
- US-A1- 2003 168 552
- STEINKE S: "AUS DER TRICKKISTE DER FLUGZEUGENTWICKLER AIRBUS-KONZEPTE FUER UEBERMORGEN" FLUG REVUE, STUTTGART, DE, vol. 1/2001, janvier 2001 (2001-01), pages 22-25, XP009053625

## Description

La présente invention concerne un aéronef à impact environnemental réduit.

On sait que les systèmes propulsifs à hélices, par exemple-les-turbopropulseurs à hélice unique ou les propfans à hélices contrarotatives, présentent de meilleurs rendements énergétiques que les turbomoteurs.

Cependant, la plupart des aéronefs existants sont mus par des turbomoteurs qui, en conséquence, d'une part, sont gourmands en combustible et, d'autre part, sont des sources de pollution environnementale par leurs rejets dans l'atmosphère.

Par suite, en ce qui concerne l'économie d'énergie et la pollution environnementale, il serait plus avantageux de munir les aéronefs de systèmes propulsifs à hélices plutôt que de turbomoteurs.

Cependant, en fonctionnement, les systèmes propulsifs à hélices sont encore plus bruyants que les turbomoteurs, de sorte que l'avantage en économie d'énergie et en pollution environnementale par rejets, dont on bénéficierait par le remplacement des turbomoteurs par des systèmes propulsifs à hélices, serait accompagné par l'inconvénient d'une augmentation de la pollution sonore. La pollution sonore ainsi atteinte serait inacceptable-et, de toute façon, difficilement compatible avec les réglementations actuellement en vigueur.

Par ailleurs,-on connaît déjà, par exemple par GB-1 397 068, des aéronefs comportant :
- au moins un turbomoteur, monté à l'arrière de l'aéronef, sur le dos de celui-ci ; et
- une cellule, dont la partie arrière comporte un empennage horizontal et deux empennages verticaux, respectivement disposés aux extrémités dudit empennage horizontal, ladite partie arrière formant une surface masquante pour le bruit engendré vers le bas par ledit turbomoteur.

Bien entendu, dans une telle disposition, l'axe- dudit turbomoteur est parallèle à l'axe longitudinal de l'aéronef, de sorte que le bruit engendré par ledit moteur, qui, comme on le sait, est émis vers l'avant et vers d'arrière de celui-ci, se propage vers l'avant et vers l'arrière dudit aéronef, seule une partie de ce bruit étant masquée vers le-bas par ladite surface masquante de la partie arrière de la cellule, à la condition que ledit empennage horizontal se trouve en arrière de la sortie de la nacelle dudit turbomoteur. L'efficacité globale du masque formé par la partie arrière de la cellule n'est donc pas optimale.

La présente invention a pour objet un aéronef dont la consommation en combustible est proche de celle d'un aéronef à hélices comparable et dont l'émission du bruit vers le sol est au plus égale à celle d'un aéronef à turbomoteur, également comparable.

A cette fin, selon l'invention, l'aéronef à impact environnemental réduit, présentant un axe longitudinal et comportant :
- au moins un moteur monté à l'arrière de l'aéronef, sur le dos de celui-ci, avec son axe au moins sensiblement parallèle audit axe longitudinal de l'aéronef ; et
- une cellule, dont la partie arrière comporte un empennage -horizontal et deux empennages verticaux; respectivement disposés aux extrémités dudit empennage horizontal, ladite partie arrière de la cellule formant une barrière au moins pour le bruit engendré vers le bas par ledit moteur,
est remarquable en ce que :
- ledit moteur est du type comportant au moins une hélice ; et
- ladite hélice est disposée à l'aplomb dudit empennage horizontal.

En effet, de façon étonnante, la demanderesse a constaté que si, dans une disposition d'aéronef du type rappelé ci-dessus et décrit dans GB-1 397 068, on remplaçait le turbomoteur par un système propulsif à hélice(s), on obtenait, à la condition de disposer ladite surface masquante juste en dessous de la ou des hélice(s), (alors que dans GB-1 397 068 cette surface masquante est très en arrière de la sortie du turbomoteur), une atténuation excellente du bruit dudit système propulsif, cette atténuation étant telle que le bruit émis par ce dernier, bien qu'intrinséquement plus intense que celui d'un turbomoteur, était bien mieux masqué par ladite partie arrière de la cellule, et donc beaucoup moins intense dans l'environnement dudit aéronef.

Une explication de cet excellent résultat peut être que le bruit d'une hélice est très directif, le maximum du bruit étant perçu au voisinage du plan de l'hélice et ledit bruit diminuant fortement lorsque l'on s'éloigne de ce plan. Aussi, dont un mode de réalisation avantageux de la présente invention, ladite partie arrière de la cellule est dimensionnée pour faire barrière, de part et d'autre du plan de la ou des hélices, à une intensité sonore au moins approximativement égale à -5dB par rapport à l'intensité sonore maximale émise par ledit moteur.

De préférence, ladite (ou lesdites) hélices est/sont disposée(s) à l'arrière dudit moteur et est/sont apte(s) à exercer une- poussée sur ledit aéronef. Ainsi, l'hélice ou les hélices se trouve(nt) à un emplacement de section réduite du fuselage de l'aéronef, ce qui ménage plus-de place pour son (leur) installation. De plus, la (ou les hélices) est/sont ainsi éloignée(s) de la cabine des passagers, ce qui est bénéfique pour le confort de ces derniers.

Par ailleurs, afin de limiter le plus possible la consommation en combustible du moteur, il est préférable que ladite ou lesdites hélices ne comporte(nt) aucun carénage périphérique.

De plus, il est avantageux que ledit moteur comporte deux hélices coaxiales contrarotatives. En effet, dans ce cas, le diamètre desdites hélices est réduit, ce qui facilite l'intégration dudit moteur sur l'aéronef.

Pour éviter toute interaction aérodynamique et toute interaction vibratoire, notamment acoustique, entre la ou les hélice(s) et la partie arrière de la cellule, il est avantageux que la distance la plus petite entre l'extrémité d'une hélice et ladite partie arrière soit au moins égale à 10% du diamètre de ladite hélice.

Bien entendu, l'aéronef conforme à la présente invention peut être monomoteur et ne comporter qu'un seul moteur à hélice(s) monté à l'arrière de la façon décrite ci-dessus. Cependant, en plus de ce dernier moteur, il peut comporter en outre au moins deux turbomoteurs portés symétriquement par les ailes dudit aéronef. Un tel agencement est avantageux dans ce sens que le moteur arrière à hélice(s), peu gourmand en combustible et peu bruyant du fait du masque antibruit selon l'invention, permet de réduire la puissance (et donc le bruit et la consommation en combustible) des turbomoteurs.

Cependant, dans un mode de réalisation préféré de l'aéronef conforme à la présente invention, on prévoit deux moteurs à hélice(s) disposés l'un à côté de l'autre avec leurs axes parallèles.

Dans ce cas, pour éviter toute interaction aérodynamique et acoustique entre les deux moteurs (et également pour permettre la circulation d'un opérateur entre les hélices lors d'opérations de maintenance), on ménage une distance d'au moins 60 cm entre les extrémités des hélices en regard.

Les figures du dessin annexé feront bien comprendre comment l'invention peut être réalisée. Sur ces figures, des références identiques désignent des éléments semblables.
Les figures 1, 2 et 3 illustrent schématiquement un mode de réalisation préféré de l'aéronef conforme à la présente invention, respectivement en vue latérale, en vue de -l'avant et en vue-de dessus.
La figure 4 est une vue latérale schématique, à plus grande échelle, de la partie arrière de l'aéronef des figures 1 à 3.
La figure 5 est une vue de dessus schématique correspondant à la figure 4.
Les figures 6, 7 et 8 illustrent schématiquement un autre mode de réalisation de l'aéronef conforme à la présente invention, respectivement en vue latérale, en vue de l'avant et en vue de dessus.

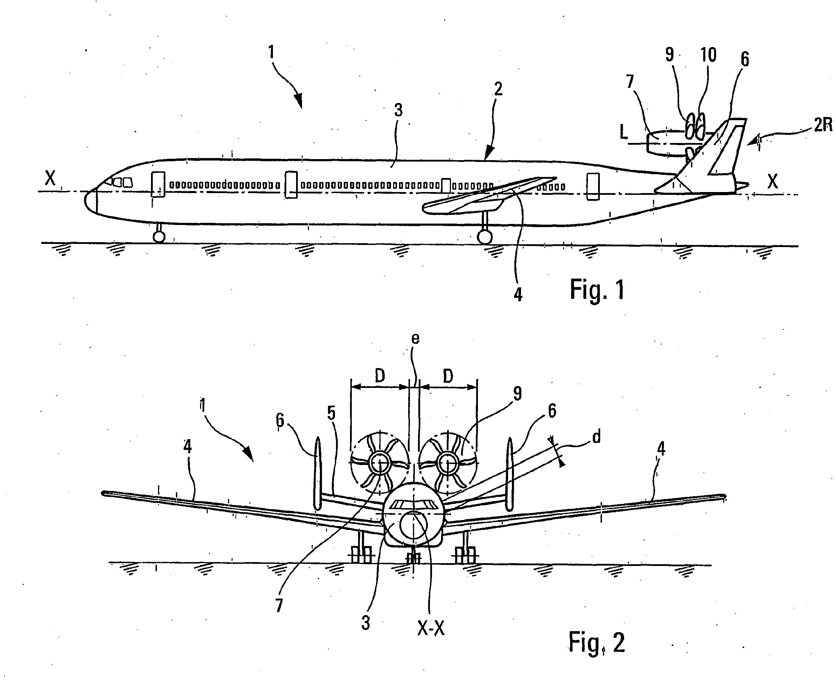

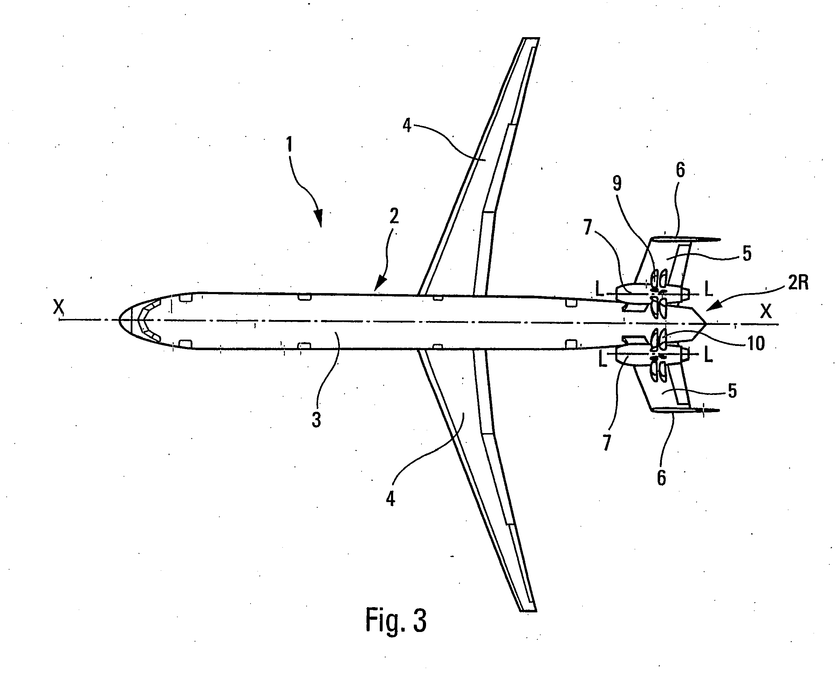

L'avion commercial 1, conforme à l'invention et représenté schématiquement sur les figures 1 à 3, présente un axe longitudinal X-X et comporte une cellule 2, qui est constituée d'un fuselage 3, d'ailes 4, d'un empennage horizontal, 5 et de deux empennages verticaux 6. Les ailes 4 ne portent aucun moteur et les empennages-verticaux 6 sont disposés aux extrémités de l'empennage horizontal 5.

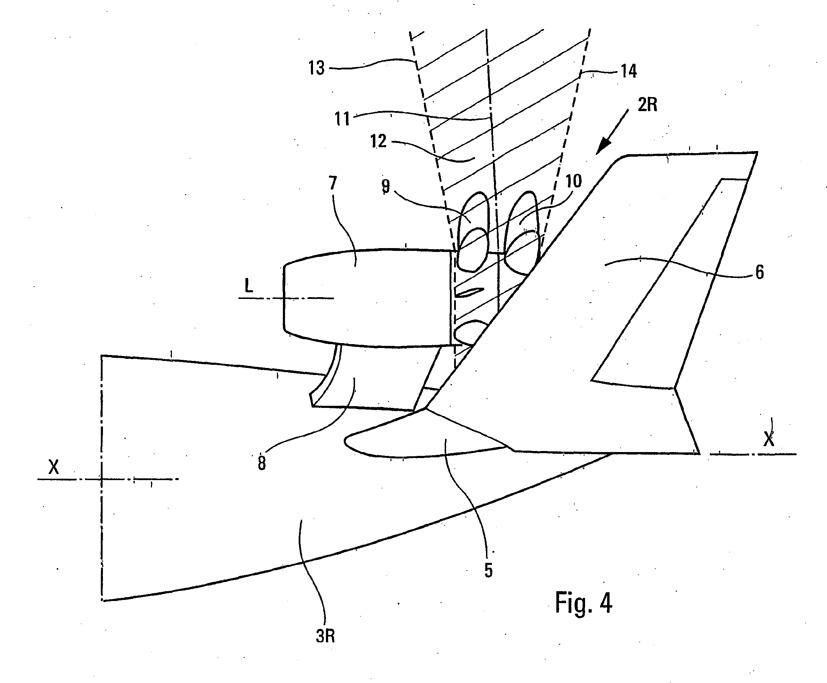

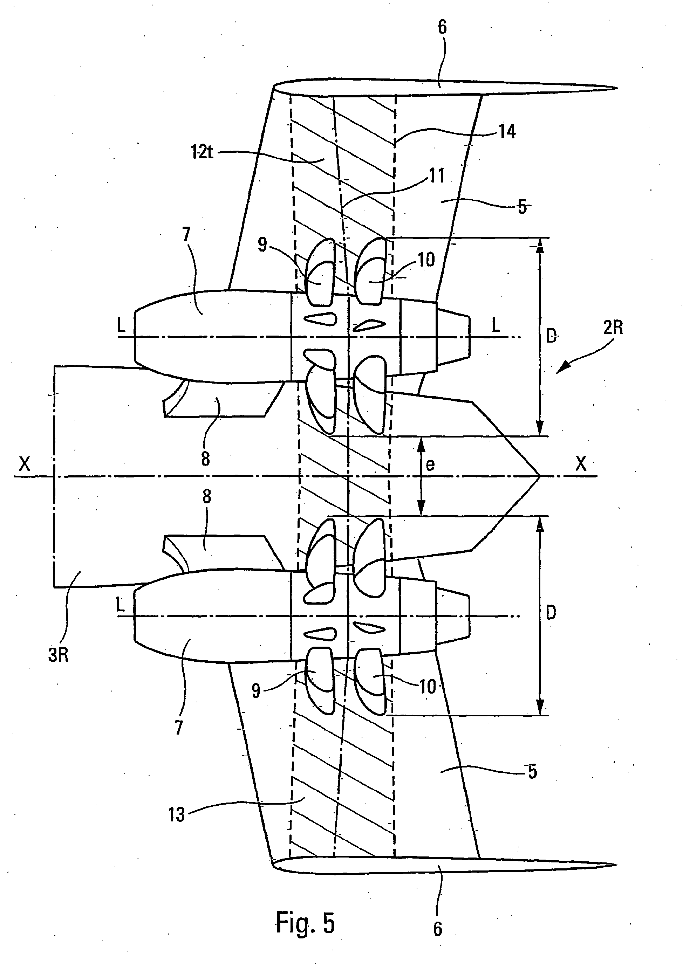

A l'arrière de l'avion 1 sont montés deux moteurs à hélices 7, disposés sur le dos dudit avion avec leurs axes L-L parallèles à l'axe longitudinal X-X. Les moteurs 7 sont portés par des pylônes 8 (voir également les figures 4 et 5) et sont disposés côte à côte. Du côté arrière, chaque moteur 7 comporte deux hélices contrarotatives 9, 10 pousseuses, de diamètre D, non carénées. Les deux hélices 9, d'une part, et les deux hélices 10, d'autre- part, sont disposées en regard l'une de l'autre et ménagent entre elles un espace e, au moins égal à 60 cm. Par ailleurs, la plus petite distance d entre l'extrémité des hélices 9, 10 et ladite cellule 2 est au moins égale à 10% dudit diamètre D.

Par rapport à la partie arrière 2R de la cellule 2 - partie arrière qui comporte la partie arrière 3R du fuselage 3, l'empennage horizontal 5 et les empennages verticaux 6 les hélices 9 et 10 des deux moteurs 7 sont disposées à l'aplomb dudit empennage horizontal 5.

En fonctionnement, chacune desdites hélices 9 et 10 engendre un bruit dont l'intensité sonore-est maximale au voisinage de son plan et qui décroît rapidement lorsqu'on s'en écarte le long des axes L-L. Dans le cas présent, les deux couples d'hélices 9 et 10 engendrent, autour desdits axes L-L, un bruit global dont l'intensité sonore maximale est une surface sensiblement plane 11 passant entre les hélices 9 et 10 de chaque couple, comme cela est représenté sur les figures 4 et 5. Sur ces deux dernières figures, on a également représenté une zone de bruit 12, définie par une -limite avant 13 et une limite arrière 14, disposées de part et d'autre de la surface 11 d'intensité sonore maximale et auxquelles l'intensité sonore est égale à -5dB par rapport à ladite intensité sonore maximale.

Aussi, conformément à la présente invention, la disposition relative des hélices 9, 10, de l'empennage horizontal 5 et des empennages verticaux 6 est telle que, au voisinage desdits moteurs 7, ladite zone de bruit 12 se trouve à l'intérieur du canal formé par lesdits empennages horizontal 5 et verticaux 6, comme cela est bien visible sur la figure 5 sur laquelle on a représenté la trace 12 t de la zone 12 sur l'empennage horizontal 5.

Ainsi, le bruit émis par les moteurs 7 est masqué, vers le bas, par l'empennage horizontal 5 et, partiellement latéralement, par les empenna= ges verticaux 6.

Par suite, lors de décollages et d'atterrissages, le bruit émis par les moteurs 7 de l'avion 1 en direction du sol est fortement réduit, puisque masqué -par l'empennage horizontal 5 et, partiellement, par les empennages verticaux 6.

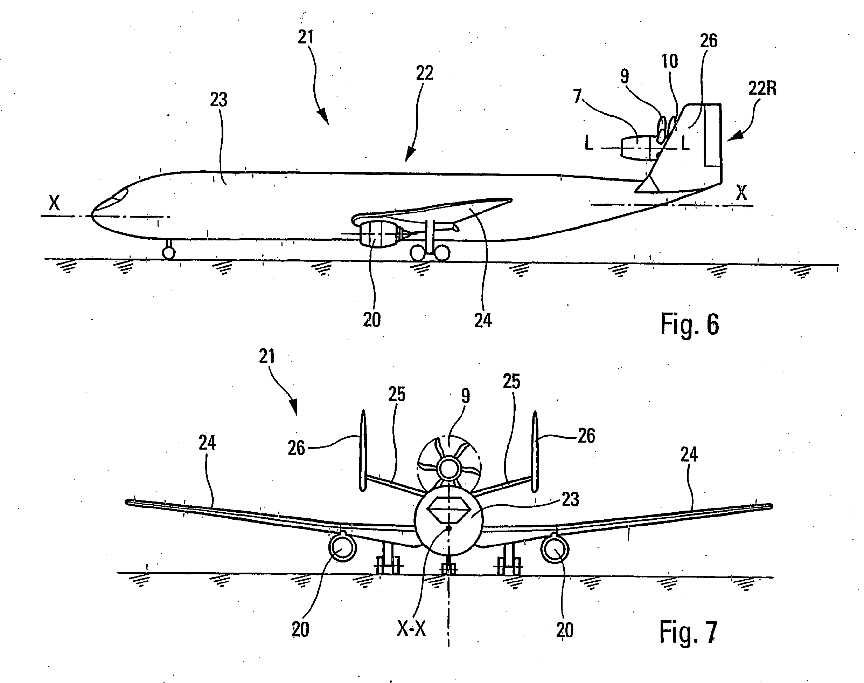

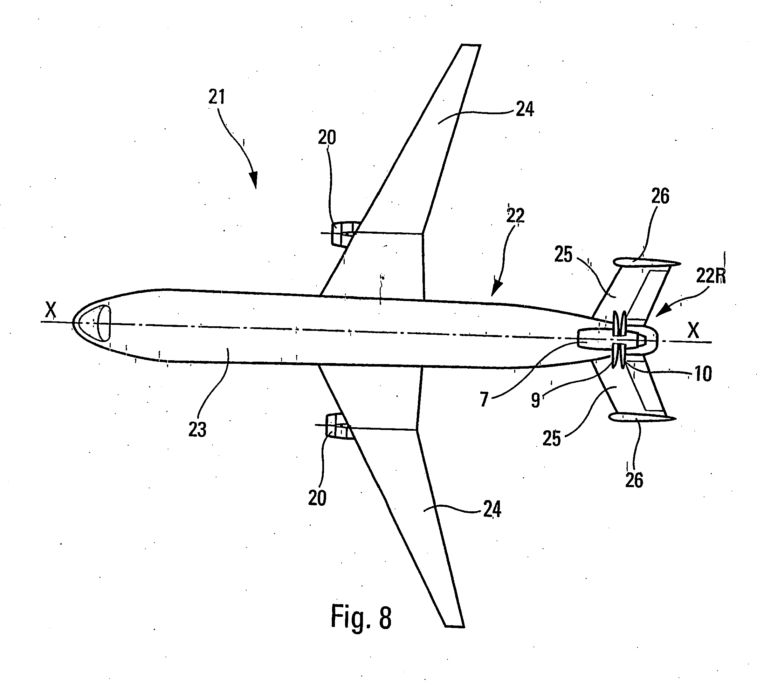

L'avion commercial 21, conforme à la présente invention et représenté schématiquement par les figures 6 à 8, présente également un axe longitudinal X-X et comporte une cellule 22, constituée d'un fuselage 23, d'ailes 24, d'un empennage horizontal 25 et de deux empennages verticaux 26. Les ailes 24 portent chacune un turbomoteur 20 et les empennages verticaux 26 sont disposés aux extrémités de l'empennage horizontal 5.

A l'arrière de l'avion 21 est monté centralement un unique moteur 7 à hélices contrarotatives 9 et 10, dont l'axe L-L est parallèle à l'axe X-X et disposé dans le même plan vertical.

De façon semblable à ce qui a été décrit ci-dessus en regard des figures 1 à 5, la disposition des hélices 9, 10 et des empennages 25 et 26 est telle que le bruit engendré par lesdites hélices est masqué vers le bas dudit avion 21 par la partie arrière 22R de la cellule 22, dont font partie lesdits empennages 25 et 26.

On remarquera que, par rapport à un avion biturbomoteur usuel de mêmes performances, l'avion 21 peut utiliser des turbomoteurs 20 moins puissants (et donc moins bruyants) du fait de la présence du moteur 7 à l'arrière. Globalement, l'avion 21 peut être moins bruyant et consommer moins de combustible qu'un tel avion biturbomoteur.

## Revendications

1. Aéronef (1, 21) à impact environnemental réduit, présentant un axe longitudinal (X-X) et comportant :
- au moins un moteur (7) monté à l'arrière de l'aéronef, sur le dos de celui-ci, avec son axe (L-L) au moins sensiblement parallèle audit axe longitudinal (X-X) de l'aéronef ;
- une cellule (2, 22), dont la partie arrière (2R, 22R) comporte un empennage horizontal (5, 25) et deux empennages verticaux (6, 26), respectivement disposés aux extrémités dudit empennage horizontal, ladite partie arrière de la cellule formant une barrière au moins pour le bruit engendré vers le bas par ledit moteur,
**caractérisé en ce que** :
- ledit moteur (7) est du type comportant au moins une hélice (9, 10) ; et
- ladite hélice (9, 10) est disposée à l'aplomb dudit empennage horizontal (5, 25).

2. Aéronef selon la revendication 1,
**caractérisé en ce que** ladite partie arrière (2R, 22R) de la cellule (2, 22) est dimensionnée pour faire barrière, de part et d'autre du plan de l'hélice, à une intensité sonore au moins approximativement égale à -5 dB par rapport à l'intensité sonore maximale émise par ledit moteur.

3. Aéronef selon l'une des revendications 1 ou 2,
**caractérisé en ce que** ladite hélice (9, 10) est disposée à l'arrière dudit moteur (7) et est apte à exercer une poussée sur ledit aéronef.

4. Aéronef selon l'une des revendications 1 à 3,
**caractérisé en ce que** ladite hélice (9,10) ne comporte aucun carénage périphérique.

5. Aéronef selon l'une des revendications 1 à 4,
**caractérisé en ce que** la distance (d) la plus petite entre l'extrémité de l'hélice (9, 10) et ladite partie arrière (2R, 22R) de la cellule est au moins égale à 10% du diamètre (D) de ladite hélice.

6. Aéronef selon l'une des revendications 1 à 5,
**caractérisé en ce que** ledit moteur (7) comporte deux hélices coaxiales contrarotatives (9, 10), toutes deux disposées à l'aplomb dudit empennage horizontal (5, 25).

7. Aéronef selon l'une des revendications 1 à 6,
**caractérisé en ce qu'**il comporte un seul moteur à hélice(s) (7) monté à l'arrière de l'aéronef, sur le dos de celui-ci, et au moins deux turbomoteurs (20) portés symétriquement par les ailes (24) dudit aéronef (21).

8. Aéronef selon l'une des revendications 1 à 6,
**caractérisé en ce qu'**il comporte deux moteurs à hélice(s) (7) montés à l'arrière de l'aéronef, sur le dos de celui-ci et disposés l'un à côté de l'autre, avec leurs axes parallèles.

9. Aéronef selon la revendication 8,
**caractérisé en ce que** la distance (e) entre les extrémités des hélices desdits moteurs (7) est au moins égale à 60 cm.

## Claims

1. An aircraft (1, 21) with reduced environmental impact, having a longitudinal axis (X-X) and comprising:
- at least one engine (7) mounted at the rear of the aircraft, on the back thereof, with its axis (L-L) at least substantially parallel to said longitudinal axis (X-X) of the aircraft;
- a cell (2, 22), the rear part (2R, 22R) of which comprises a horizontal empennage (5, 25) and two vertical empennages (6, 26) positioned one at each end of said horizontal empennage, said rear part of the cell forming a barrier at least to the noise generated downwards by said engine,
**characterized in that**:
- said engine (7) is of the type comprising at least one propeller (9, 10); and
- said propeller (9, 10) is positioned vertically in line with said horizontal empennage (5,25).

2. The aircraft as claimed in claim 1,
**characterized in that** said rear part (2R, 22R) of the cell (2, 22) is dimensioned to act as a barrier, by each side of the plane of the propeller, to an acoustic intensity at least approximately equal to -5dB with respect to the maximum acoustic intensity emitted by said engine.

3. The aircraft as claimed in one of claims 1 or 2,
**characterized in that** said propeller (9, 10) is positioned behind said engine (7) and is able to exert thrust on said aircraft.

4. The aircraft as claimed in one of claims 1 to 3,
**characterized in that** said propeller (9, 10) does not have any peripheral cowling.

5. The aircraft as claimed in one of claims 1 to 4,
**characterized in that** the shortest distance (d) between the end of the propeller (9, 10) and said rear part (2R, 22R) of the cell is at least equal to 10% of the diameter (D) of said propeller.

6. The aircraft as claimed in one of claims 1 to 5,
**characterized in that** said engine (7) has two coaxial contra-rotating propellers (9, 10) both positioned vertically in line with said horizontal empennage (5,25).

7. The aircraft as claimed in one of claims 1 to 6,
**characterized in that** it comprises a single propeller(s) engine (7) which is mounted at the rear of the aircraft, on the back thereof, and at least two turbine engines (20) carried symmetrically by the wings (24) of said aircraft (21).

8. The aircraft as claimed in one of claims 1 to 6,
**characterized in that** it comprises two propeller(s) engines (7) which are mounted at the rear of the aircraft, on the back thereof, and positioned one beside the other, with their axes parallel.

9. The aircraft as claimed in claim 8,
**characterized in that** the distance (e) between the ends of the propellers of said engines (7) is at least equal to 60 cm.

## Patentansprüche

1. Luftfahrzeug (1, 21) mit reduzierten Umweltauswirkungen, das eine Längsachse (X-X) aufweist und folgendes umfasst:
- mindestens einen Motor (7), der hinten auf dem Rücken des Luftfahrzeugs angebracht ist, wobei seine Achse (L-L) mindestens im Wesentlichen parallel zu der Längsachse (X-X) des Luftfahrzeugs ist;
- eine Zelle (2, 22), deren hinterer Teil (2R, 22R) eine waagerechte Leitflosse (5, 25) und zwei senkrechte Leitflossen (6, 26), die jeweils an den Enden der waagerechten Leitflosse angeordnet sind, umfasst, wobei der hintere Teil der Zelle mindestens eine Barriere für den Lärm bildet, der von dem Motor nach unten verursacht wird,
**dadurch gekennzeichnet, dass**:
- der Motor (7) von der Art ist, die mindestens einen Propeller (9, 10) umfasst; und
- der Propeller (9, 10) lotrecht zu der waagerechten Leitflosse (5, 25) angeordnet ist.

2. Luftfahrzeug nach Anspruch 1,
**dadurch gekennzeichnet, dass** der hintere Teil (2R, 22R) der Zelle (2, 22) dimensioniert ist, um auf beiden Seiten der Ebene des Propellers eine Barriere für eine Lautstärke zu bilden, die im Verhältnis zu der Höchstlautstärke, die von dem Motor abgegeben wird, mindestens ungefähr -5 dB beträgt.

3. Luftfahrzeug nach einem der Ansprüche 1 oder 2,
**dadurch gekennzeichnet, dass** der Propeller (9, 10) hinten am Motor (7) angeordnet ist und dazu geeignet ist, um einen Schub auf das Luftfahrzeug auszuüben.

4. Luftfahrzeug nach einem der Ansprüche 1 bis 3,
**dadurch gekennzeichnet, dass** der Propeller (9, 10) keinerlei umlaufende Verkleidung umfasst.

5. Luftfahrzeug nach einem der Ansprüche 1 bis 4,
**dadurch gekennzeichnet, dass** der kleinste Abstand (d) zwischen dem Ende des Propellers (9, 10) und dem hinteren Teil (2R, 22R) der Zelle mindestens 10 % des Durchmessers (D) des Propellers beträgt.

6. Luftfahrzeug nach einem der Ansprüche 1 bis 5,
**dadurch gekennzeichnet, dass** der Motor (7) zwei koaxiale gegenläufige Propeller (9, 10) umfasst, die beide lotrecht zu der waagerechten Leitflosse (5, 25) angeordnet sind.

7. Luftfahrzeug nach einem der Ansprüche 1 bis 6,
**dadurch gekennzeichnet, dass** es nur einen Motor mit Propeller(n) (7), der hinten auf dem Rücken des Luftfahrzeugs angebracht ist, und mindestens zwei Turbomotoren (20), die symmetrisch von den Flügeln (24) Luftfahrzeugs (21) getragen werden, umfasst.

8. Luftfahrzeug nach einem der Ansprüche 1 bis 6,
**dadurch gekennzeichnet, dass** es zwei Motoren mit Propeller(n) (7), die hinten auf dem Rücken des Luftfahrzeugs angebracht und nebeneinander angeordnet sind, umfasst, wobei ihre Achsen parallel sind.

9. Luftfahrzeug nach Anspruch 8,
**dadurch gekennzeichnet, dass** der Abstand (e) zwischen den Enden der Propeller der Motoren (7) mindestens 60 cm beträgt.
